# EUROPEAN PATENT SPECIFICATION

(11) **EP 3 871 507 B1**
(45) Date of publication and mention of the grant of the patent: **14.09.2022**
(21) Application number: 21159466.8
(22) Date of filing: 26.02.2021
(51) Int. Cl.: A22C 17/00, A22C 18/00

(54) **DEBONING APPARATUS FOR DEBONING A HAM**
ENTBEINUNGSGERÄT ZUM ENTBEINEN VON SCHINKEN
APPAREIL DE DÉSOSSAGE POUR DÉSOSSER DU JAMBON

(30) Priority: 28.02.2020 IT 202000004261
(43) Date of publication of application: 01.09.2021
(73) Proprietor: VE.MA.C. Societa' A Responsabilita' Limitata, 41051 Castelnuovo Rangone (MO) (IT)
(72) Inventor: COSTANTINI, Maurizio, 41057 Spilamberto (MO) (IT); VEZZALI, Franco, 41057 Spilamberto (MO) (IT)
(74) Representative: Savini, Stefania

(56) References cited:
- GB-A- 2 425 103
- IE-A1- 20 090 566
- US-A- 5 173 076

## Description

The invention relates to a deboning apparatus for deboning a ham, in particular for deboning a raw ham.

Submitting a ham to a series of processes before being marketed is known. For example, hams, in particular whole raw hams, are subjected to a deboning operation that consists of removing one or more bones from the ham by a longitudinal incision in order to obtain a ham that is deboned and thus easily sliceable also by electric slicers in addition to specific sharpened knives. The rotating blade of the electric slicers and of the sharpened knives could in fact get damaged in contact with one of the bones of the ham.

Once the deboning operation has finished, the longitudinal incision made to enable one or more bones to be extracted is resewed or pressed.

The ham can then be placed inside a mould and pressed there through the cooperation of a die and a punch to enable air stored inside the meat to be extracted after removal of one or more bones and to give the ham a desired shape. The mould can in fact give the deboned ham the characteristic pear shape. In this case, the deboned ham can be intended, for example, to be sliced on the counter of a shop or domestically. Alternatively, the mould can give the deboned ham a parallelpipedon shape, which is also known by the name of brick. In this case, the deboned ham is intended to be sliced industrially and packaged in trays in a controlled atmosphere, for example to be distributed to supermarkets.

The deboning operation is generally performed by hand by an operator, because each ham has its own distinctive features. In fact, the shape, dimensions and arrangements of the bones and the sinews thereof vary from ham to ham.

From the prior art, it is known to debone a ham by hand using a technique known as "slipped out". This "slipped out" technique involves the ham being rested on a surface, being immobilized in a clamp until a saw cuts the final part of the leg of the ham and an operator removes a first bone called "*anchetta*"*.*

After this, the ham is placed vertically with respect to a floor, i.e. with a longitudinal axis thereof substantially perpendicular to the floor, and immobilized at an end near the final part of the leg. An operator then performs a substantially vertical cut in the ham that creates an opening in the meat through which it is possible to pull one or more bones out.

From the prior art, deboning a ham by hand using a technique known as "open" technique is known. This "open" technique involves the ham being rested on a surface, being immobilized in a clamp until a saw cuts the final part of the leg of the ham and an operator removes a first bone called the *"anchetta".*

After which, the ham is supplied to, and moved along, a conveying device provided inside a ham processing line, until it reaches near a deboning apparatus in a deboning station of which the femur bone is removed. The operator has to move the ham manually from the conveying device to a work surface provided in the deboning station, this work surface being distant also some metres from the conveying device.

After the ham is rested on the work surface, the ham is immobilized there by clamps fitted so as to be pushed from the work surface upwards, the ham being subjected to extraction of the femur bone. The clamps thus obstruct the work surface and are an obstacle to the movement of the ham.

Extracting the femur bone is rather a complex and laborious operation. The operator has to use a deboning knife to make an incision around the head of the femur and a longitudinal cut along the femur bone, starting from the ankle bone to the knee joint. Subsequently, the operator, still by using a deboning knife, has to remove the rind that covers the joint of the knee and separate the bone from the fibrous parts (comprising for example ligaments, tendons). Lastly, once the femur bone is partially uncovered, the operator proceeds with the removal by gripping the femur near the ankle bone and pulling the femur forcibly by hand.

The deboning operation thus involves significant physical effort by the operator.

After the ham has been deboned, it has to be positioned again on the conveying device, by the hands of the operator. The operations of loading the ham from the conveying device to the work surface and unloading the ham from the work surface to the conveying device are performed manually by the same operator and are repetitive and very tiring because of the significant weight of the raw hams.

The operator thus has to make a significant effort both during movement of the hams and during the operation of deboning the hams themselves.

GB 2425103 A discloses a work station comprising a work surface for processing meat-based products with a work position on one side and an outlet conveyor on the opposite side. A conveying system, suspended above the level of the work surface, is positioned next to an end of the work surface in order to take the meat-based products to the work position. The portions of usable meat removed from a piece of meat are positioned on an outlet conveyor, maintaining the sequence of the pieces of meat, from which they can be transferred together to a packaging station by a transferring conveyor. The work surface is provided with a work conveyor that is tilted downwards away from the conveying system, which is washed and sanitized after each meat-based product has been processed. A conveyor for rejects for reject material is provided between the work surface and the outlet conveyor.

US 5173076 A discloses a thigh deboner for edible parts of animals, like chicken thighs, comprising a series of conveying trays on which the thighs are loaded to be deboned. The parts of animals are loaded with the bones of the thighs extending transversely to the moving direction of the conveying trays along a processing path. Pusher assemblies each engage an end of the bones of the thighs and urge the bones of the thighs longitudinally through openings formed in stripper disks positioned adjacent to the rear edges of the conveying trays. Whilst the bones of the leg are progressively pushed through the openings of the stripper discs, the bones of the thighs are engaged by the edges of a scraper, which scrape the meat of the thighs from the bones of the thighs.

One drawback of the deboning apparatuses of known type is that they require a significant effort on the part of the operator, who has to move the hams to be deboned and has to perform the deboning operation.

One object of the invention is to improve the deboning apparatuses for deboning a ham of known type.

Another object of the invention is to provide a deboning apparatus for deboning a ham that facilitates the deboning operation and the operations of moving said ham related to the deboning operation so as to avoid or minimize the manual movement of said ham and thus effort by the operator.

A further object of the invention is to provide a deboning apparatus for deboning a ham that is simple, tough and inexpensive.

A still further object of the invention is to provide a deboning apparatus for deboning a ham that can be installed easily on a pre-existing ham processing line without any need to make substantial changes to the processing line.

The aforementioned objects and still others are achieved by a deboning apparatus for deboning a ham according to one or more of the claims set out below.

Owing to the invention, it is possible to reduce considerably the fatigue to which an operator is subjected who has to move a ham in order to debone the ham. In fact, the deboning apparatus according to the invention is provided with moving means that enables the ham to be loaded automatically by ham supplying means of a ham processing line to an operating zone of the deboning apparatus where the deboning operation occurs, automated movement of the ham inside the operating zone and automated unloading of the ham from the operating zone to removing means of the ham processing line. Further, the deboning apparatus according to the invention is provided with gripping means arranged for immobilizing the ham during the deboning operation that does not obstruct the support surface on which the ham is positioned during the deboning operation.

The deboning apparatus according to the invention is simple to make and can be installed simply and easily on the pre-existing ham production lines.

The invention can be better understood and implemented with reference to the attached drawings that illustrate an embodiment thereof by way of non-limiting example, in which:
Figure 1 is a top view of a portion of a ham processing line showing a ham deboning apparatus according to the invention included in said ham processing line;
Figure 2 is an enlarged view of a portion of the deboning apparatus of Figure 1 showing two deboning stations;
Figure 3 is a section taken along the plane III-III of Figure 1;
Figure 4 is an enlarged detail of Figure 3 showing an operating zone of a deboning unit of the deboning apparatus according to the invention;
Figure 5 is a section taken along the plane V-V of Figure 1.

With reference to the aforesaid Figures, a deboning apparatus according to the invention has been indicated overall by 1, this deboning apparatus is arranged for removing at least one bone from a ham 2 to be deboned, the ham 2 being in particular, a whole raw ham.

The deboning apparatus 1 is couplable with or insertable into a ham processing line 3 inside which the hams 2 are advanced along an advancement path that traverses a plurality of processing stations in which the hams 2 undergo in succession respective processing before marketing of the hams.

One of the processes that the hams 2 undergo along the ham processing line 3 is deboning, which consists of removing one or more ham bones 2 by a longitudinal incision in order to obtain a ham that is deboned and thus easily sliceable also by electric slicers in addition to by specific sharpened knives. In particular, deboning can be performed by "open" technique, as explained better further on in the description. For example, the bones that can be removed are also the *anchetta* and the femur bone of a pig thigh that constitutes each ham 2.

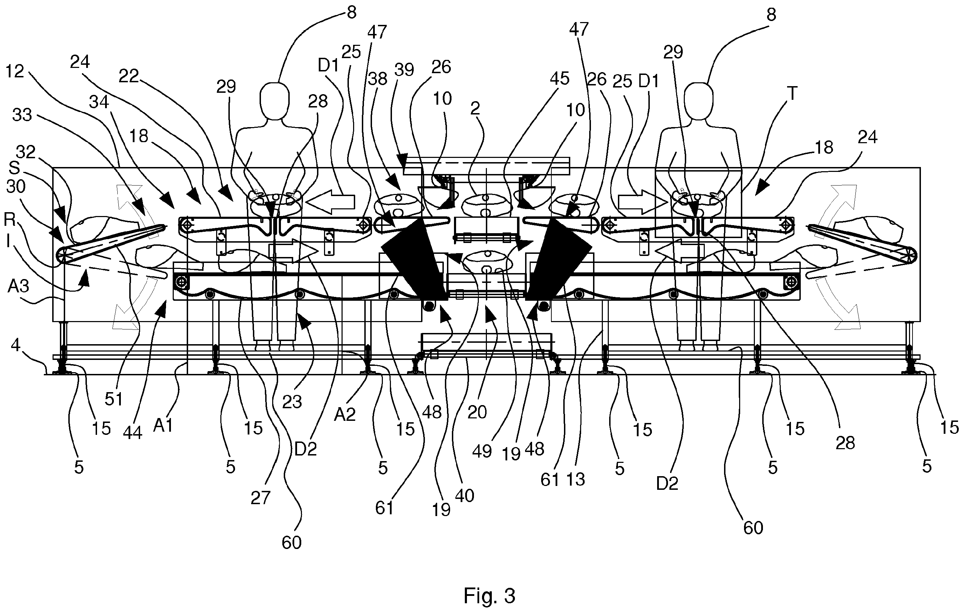

The deboning apparatus 1 is located on a resting plane 4 (Figure 3), for example a floor of an industrial plant in which the ham processing line 3 is installed.

The deboning apparatus 1 comprises at least one deboning unit 6 provided with an operating zone 7 in which an operator 8 extracts the bones 2 from the ham to be deboned to obtain a deboned ham.

The deboning unit 6 comprises a frame 12 (Figure 3) provided with support means by which the deboning unit 6 rests on the resting plane 4. The support means can comprise a plurality of legs 15 and of feet 5, each foot 5 being connected on one side to a respective leg 15 and on the other side to the resting plane 4.

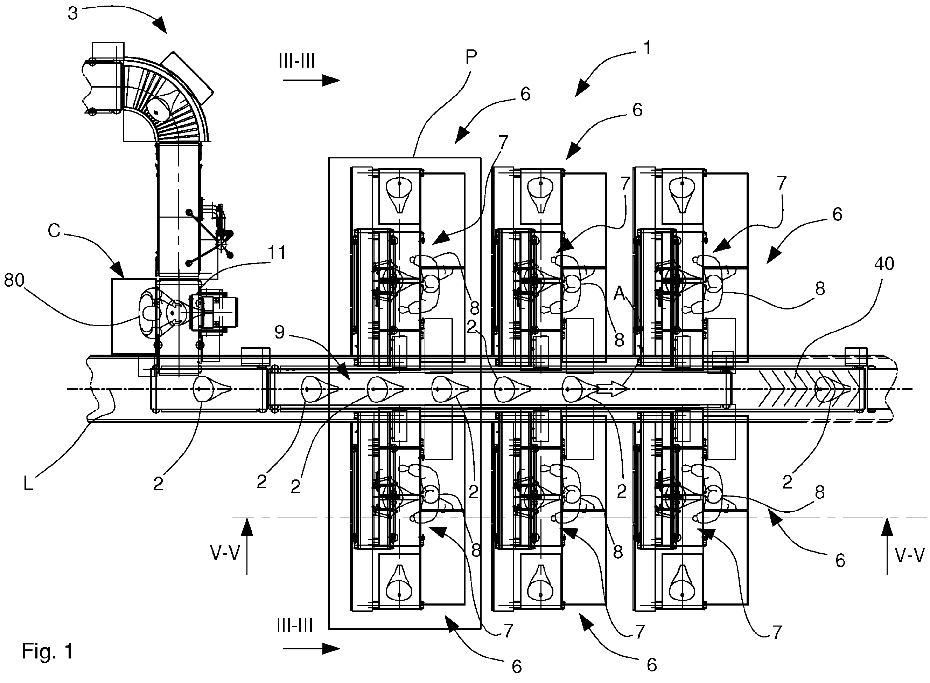

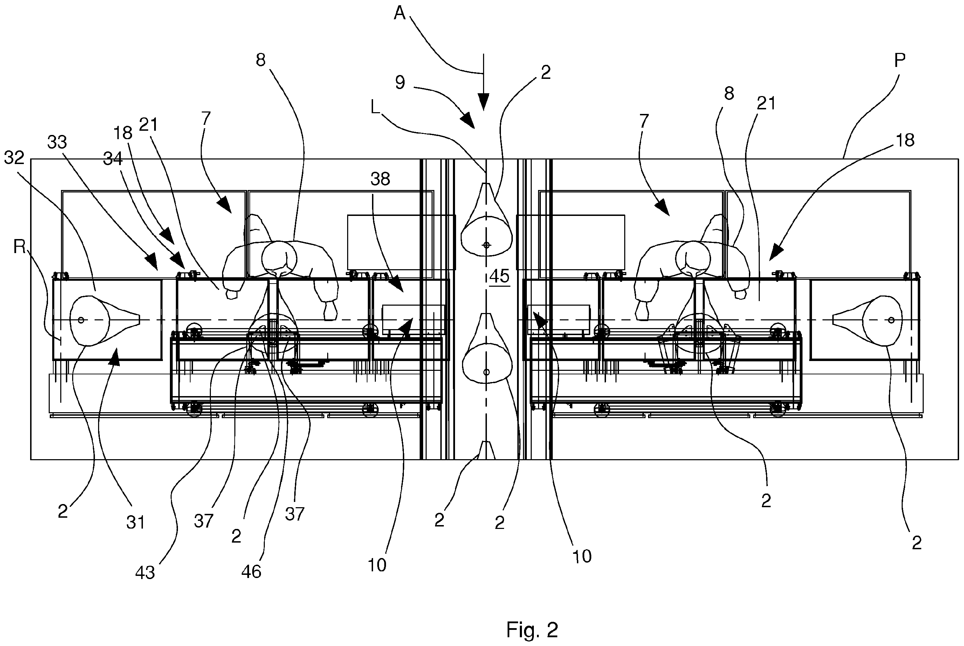

With particular reference to Figure 2 that shows an enlarged portion P of the deboning apparatus 1 of Figure 1, the deboning apparatus 1 further comprises supplying means 9 arranged for supplying the ham 2 to be deboned from the ham processing line 3 to an entry zone 10 of the deboning unit 6. The entry zone 10 faces on one side the supplying means 9 and on the other side faces the inside of the deboning unit 6.

The entry zone 10 is thus arranged for receiving the incoming ham 2 to be deboned conveyed by the supplying means 9 so that it can be supplied to the deboning unit 6.

The supplying means 9 can be associated with, in particular connected, to the frame 12 of the deboning unit 6.

The hams 2 are conveyed by the supplying means 9 along an advancement direction A. In particular, the hams 2 are received restingly on a resting area 45 with which the supplying means 9 is provided.

The deboning apparatus 1 can comprise a plurality of deboning units 6 arranged along the supplying means 9 and on opposite sides of the supplying means 9.

For example, the deboning apparatus 1 shown in Figure 1 comprises six deboning units 6, fitted on opposite sides of the supplying means 9, i.e. three on the side facing left looking at Figure 1 and three on the side facing right looking at Figure 1.

The deboning units 6 fitted on opposite sides of the supplying means 9 can comprise pairs of deboning units 6 fitted in a specular manner with respect to the supplying means 9.

In one embodiment, the deboning units 6 are fitted to only one side of the supplying means 9.

The number and arrangement of the deboning units 6 inside the deboning apparatus 1 is variable in function of production needs and the space intended for the deboning apparatus 1 inside the processing line 3. In other words, the deboning apparatus 1 is modular and each deboning unit 6 defines a module of the deboning apparatus 1.

The supplying means 9 can comprise a conveyor belt having a longitudinal axis L substantially parallel to the advancement direction A. The longitudinal axis L can correspond to an axis of symmetry of the deboning apparatus 1.

The supplying means 9 can be associated with a conveyor of the processing line 3 that conveys the hams 2 through at least one processing station preceding the deboning apparatus 1 in the advancement path of the hams 2 inside the processing line 3. For example, the processing station immediately upstream of the deboning apparatus 1 along the advancement path of the hams 2 inside the processing line 3 can be a cutting station C in which the ham 2 to be deboned is partially arranged inside a cutting device 11, immobilized there in a clamp provided in the cutting device 11 and the final part of the leg thereof is cut by a saw with which the cutting device 11 is provided. A further operator 80 can simultaneously remove a first bone called the "anchetta".

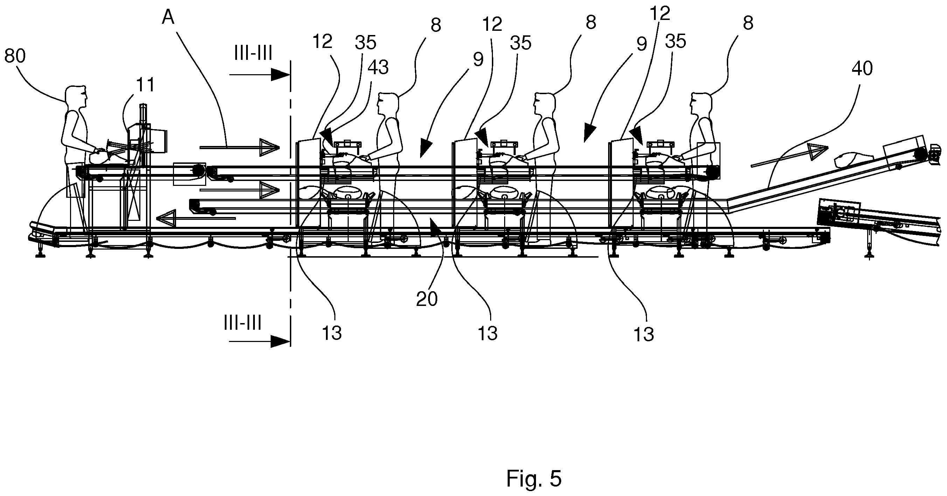

The deboning apparatus 1 further comprises a support body 13 (Figure 5) to which the supplying means 9 is fitted.

The deboning apparatus 1 further comprises at least one stopping and diverting element, which is not shown in the Figures, configured for immobilizing the ham 2 that advances along the advancement direction A and divert the ham 2 towards the desired entry zone 10.

The at least one stopping and diverting element can be fitted to the support body 13. In particular, the at least one stopping and diverting element can be connected to the supplying means 9.

The at least one stopping and diverting element is movable between an engaged position in which it interacts with the ham 2 whilst the latter advances on the supplying means 9 stopping conveying thereof along the advancement direction A and diverting the latter towards the desired deboning unit 6 and a removed position in which, on the other hand, it does not interact with the ham 2 and thus permits continuation along the advancement direction A.

At least one stopping and diverting element for each entry zone 10 can be provided.

In one embodiment, the at least one stopping and diverting element is shaped as a pusher element, that is movable transversely, i.e. substantially perpendicularly to the advancement direction A, to push the ham 2 to the appropriate deboning unit 6.

The at least one stopping and diverting element comprises a wall, in particular a wall that is retractable because it is movable vertically, i.e. in a direction that is substantially perpendicular to the resting area 45. The wall is further connected to an actuator that enables the wall to be driven transversely, i.e. substantially perpendicularly to the advancement direction A moving from the removed position to the engaged position and thus occupying an area that protrudes beyond the resting area 45, i.e. moving away from the resting plane 4. A surface of the wall is intended to contact the ham 2 in use when the actuator takes the wall to the engaged position.

The at least one stopping and diverting element can have a substantially T-shaped plan conformation, where the head of the T is formed by the wall and the shank by the actuator.

When a first stopping and diverting element for a first deboning unit 6 and a second stopping and diverting element is provided for a second deboning unit 6 opposite the first deboning unit 6 is provided, the first stopping and diverting element faces the second stopping and diverting element.

When the first stopping and diverting element moves transversely, engaging an area that protrudes beyond the resting area 45, i.e. moving away from the resting plane 4, moving from the removed position to the engaged position, the retractable wall of the first stopping and diverting element is taken to the engaged position to be able to interact with the ham 2, whereas the retractable wall of the second stopping and diverting element is moved to descend vertically along a direction substantially perpendicular to the resting plane 4 in the direction approaching the resting plane 4 so as to be arranged below the resting area 45 and thus not interacting with the ham 2 (in other words the retractable wall of the first stopping and diverting element reaches the removed position). In this manner, the second stopping and diverting element is not an obstacle to the passage of the ham 2 from the supplying means 9 to the first deboning unit 6. On the other hand, when the second stopping and diverting element moves transversely engaging an area that protrudes beyond the resting area 45, the retractable wall of the second stopping and diverting element is taken to the engaged position to be able to interact with the ham 2, whilst the retractable wall of the first stopping and diverting element is moved to lower vertically along a direction substantially perpendicular to the resting plane 4 in the direction approaching the resting plane 4 so as to be arranged below the resting area 45 and thus not interacting with the ham 2 (in other words the retractable wall of the first stopping and diverting element reaches the removed position). In this manner, the first stopping and diverting element is not an obstacle to the passage of the ham 2 from the supplying means 9 to the second deboning unit 6.

In another embodiment, the at least one stopping and diverting element is shaped as a vane element, or as a rod, hinged on an end so as to be able to rotate around a rotation axis between the engaged position and the removed position by a set angle of rotation. The vane element, or the rod, is controlled by an actuator, in particular hydraulic, connected for example to the hinged end of the vane element or of the rod so as to enable a rotation thereof at a rotation angle comprised between 30° and 90°, in particular of about 45°. In the removed position the vane element or the rod can be arranged substantially parallel to the supplying means 9 and, in particular, near an edge zone of the supplying means 9, so as not to obstruct or obstruct to a limited extent the resting area 45. In this manner, a ham 2 can be advanced by the supplying means 9 to reach the entry zone 10 of the desired deboning unit 6, i.e. in which is requested that the ham 2 be subjected to deboning. In the engaged position, on the other hand, the vane element or the rod obstructs a part of the resting area 45 such that the ham 2 interacts with the vane element/rod by sliding along a part thereof to reach an area facing the entry zone 10 where it is desired that the ham 2 is transferred whilst the vane element moves from the engaged position to the removed position. The engaged position is reached by the rod element or by the vane once it is rotated by the actuator around the rotation axis.

The deboning unit 6 further comprises moving means 18 arranged for conveying the ham 2 along a moving path provided inside the deboning unit 6.

The moving means 18 can be supported by the frame 12 of the deboning unit 6.

The moving means 18 can be associated with, in particular connected to, the support body 13 of the deboning apparatus 1.

The ham 2 is moved from the supplying means 9 to the moving means 18 owing to the least one stopping and diverting element.

The deboning unit 6 further comprises an outlet zone 19 for the deboned ham 2 arranged for receiving the incoming ham 2 once it is deboned in the operating zone 7 and transferring the outgoing ham 2 again to the ham processing line 3.

In the embodiment illustrated in the Figures, the outlet zone 19 on one side faces the inside of the deboning unit 6, whilst on the other side the outlet zone 19 faces a removing means 20 arranged for removing the deboned ham 2 from the outlet zone 19 and, then, from the deboning unit 6 and transferring the deboned ham 2 to the ham processing line 3 to be subjected to further processing, such as, for example, skinning.

The outlet zone 19 is thus arranged for receiving the deboned ham 2 and supplying the deboned ham 2 to the removing means 20.

The removing means 20 can comprise a conveyor belt. When the deboning apparatus 1 comprises a plurality of deboning units 6, such deboning units 6 are fitted to both sides of the supplying means 9 and of the removing means 20. The longitudinal axes of the removing means 20 and the longitudinal axes L of the supplying means 9 can belong to respective planes substantially perpendicular to the resting plane 4.

The moving means 18 can be arranged substantially perpendicular to the supplying means 9 and to the removing means 20.

The removing means 20 is fitted to the frame 12 of the deboning apparatus 1.

The supplying means 9 can be fitted to the frame 12, in particular to the support body 13, near the entry zone 10 and the moving means 18 can be associated with the frame 12, in particular with the support body 13, both near the entry zone 10 and near the outlet zone 9.

In use, the moving means 18 moves the ham 2 along a first moving direction D1, shown with an arrow in Figure 3, and along a second moving direction D2, which is also shown with an arrow in Figure 3, the second moving direction D2 being substantially parallel to and opposite the first moving direction D1.

In particular, the first moving direction D1 and the second moving direction D2 are substantially perpendicular to the advancement direction A.

The entry zone 10 and the outlet zone 19 act as passage zones of the hams 2 respectively entering and exiting the deboning unit 6, inasmuch as they are arranged respectively for receiving the hams 2 to be deboned supplied to the deboning unit 6 by the supplying means 9 and supplyinng the deboned hams 2 in the operating zone 7, from the deboning unit 6 to the removing means 20.

The entry zone 10 is arranged at a greater height than the outlet zone 19 with respect to the resting plane 4.

The moving means 18, in use, conveys the ham 2 inside the deboning unit 6 from the entry zone 10 to the outlet zone 19 along the moving path.

In the embodiment of the deboning apparatus 1 illustrated in the Figures, the moving path is C-shaped, in a vertical section. This vertical section is taken along a plane substantially perpendicular to the resting plane 4 and substantially perpendicular to the advancement direction A.

The operating zone 7 is interposed between the entry zone 10 and the outlet zone 19 along the moving path and, in particular, downstream of the entry zone 10 and upstream of the outlet zone 19 along the moving path of the hams 2 inside the deboning unit 6.

The operating zone 7 is arranged substantially at the same height as the entry zone 10 with respect to the resting plane 4.

In the deboning unit 6, the hams 2 are then conveyed by the moving means 18 along the moving path between the entry zone 10 and the outlet zone 19, passing through the operating zone 7, so as to supply the ham 2 to be deboned to the operating zone 7 and remove the deboned ham 2 from the operating zone 7.

The moving means 18 defines a rest surface 21 for the ham 2 along the moving path of the ham 2 inside the deboning unit 6.

With reference in particular to Figure 3, the moving means 18 comprise a first conveying device 22 arranged at a first height A1 with respect to the resting plane 4, and to second conveying device 23 arranged at a second height A2 with respect to the resting plane 4, in which the first height A1 is greater than the second height A2.

The first height A1 and the second height A2 show the distances from the resting plane 4 respectively of the rest surface 21 defined by the first conveying device 22 and of the rest surface 21 defined by the second conveying device 23.

The entry zone 10 is obtained, in particular, near an end of the first conveying device 22 and the outlet zone 19 is obtained, in particular, near an end of the second conveying device 23.

The ham 2 to be deboned is advanced by the first conveying device 22 along the first moving direction D1, whilst the deboned ham 2 is advanced by the second conveying device 23 along the second moving direction D2.

The first conveying device 22 defines a first portion of the moving path comprising a first leg of the C and the second conveying device 23 defines a second portion of the moving path comprising a second leg of the C, said first portion and said second portion 20210147 EN.docx being substantially parallel. Along the first portion, the ham 2 is advanced along the first moving direction D1 whilst along the second portion the ham 2 is advanced along the second moving direction D2.

The rest surface 21 of the moving means 18 comprises the rest surfaces of the first conveying device 22 and of the second conveying device 23.

The supplying means 9 and the first conveying device 22 can be so fitted, in particular, that the rest surface 21 of the first conveying device 22 and the resting area 45 for the ham 2 defined by the supplying means 9 are substantially coplanar. In this manner the ham 2 can easily be transferred from the resting area 45 to the rest surface 21 of the first conveying device 22 by means of the interaction of the ham 2 with the at least one stopping and diverting element 14 driven by the actuator.

The first conveying device 22 comprises at least two belt conveyors, i.e. a first conveyor belt 24 and a second conveyor belt 25 arranged in sequence along the first moving direction D1 such that the rest surface 21 that, in this case is formed by the respective rest surfaces of the two conveyor belts, is substantially parallel to the resting plane 4.

When the first conveying device 22 comprises two belt conveyors, the entry zone 10 is obtained in the conveyor belt nearer the supplying means 9, for example the second conveyor belt 25.

In the embodiment illustrated in the Figures, the first conveying device 22 comprises the first conveyor belt 24, the second conveyor belt 25 and a third conveyor belt 26, arranged in succession and so fitted that the rest surface 21 of the moving means 18, which in this case is formed by the respective outer rest surfaces of the three conveyor belts 24, 25, 26, is substantially parallel to the resting plane 4. In particular, the first conveyor belt 24 is arranged downstream of the second conveyor belt 25 and the second conveyor belt 25 is arranged downstream of the third conveyor belt 26 along the first moving direction D1.

The second conveyor belt 25 and the third conveyor belt 26 are so fitted that the rest surfaces thereof are reciprocally coplanar and further coplanar with the resting area 45 defined by the supplying means 9.

Still in the embodiment illustrated in the Figures, the second conveying device 23 comprises only one conveyor belt 27, but another embodiment that is not shown can provide several conveyor belts arranged in sequence along the second moving direction D2 as for the first conveying device 22.

Also the second conveying device 23 is so fitted that the rest surface 21 of the moving means 18, which in this case is formed by the outer support surface of the conveyor belt 27, is substantially parallel to the resting plane 4.

The removing means 20 and the second conveying device 23 can be so fitted in particular that the rest surface 21 of the second conveying device 23 is arranged substantially above a rest face 49 defined by the removing means 20. In this manner the ham 2 can be transferred, in use, from the rest surface 21 to the rest face 49 by the force of gravity.

In the case of the embodiment illustrated in the Figures, the entry zone 10 is obtained in the third conveyor belt 26 and faces the supplying means 9, whilst the outlet zone 19 is obtained in the conveyor belt 27 and faces the removing means 20.

Still in the embodiment illustrated in the Figures, the first conveyor belt 24, the second conveyor belt 25, the third conveyor belt 26 and the conveyor belt 27 are fitted to the frame 12.

The third conveyor belt 26 and the conveyor belt 27 can be further associated with, in particular connected to, the support body 13, respectively near the entry zone 10 and the outlet zone 19.

The supplying means 9 can be arranged above the removing means 20 with respect to the resting plane 4.

Each deboning unit 6 can further comprise a pusher 28 fitted to said frame 12 and arranged in the operating zone 7 so as to slide along a vertical direction V substantially perpendicular to the rest surface 21 alternatively between a non-operating configuration N in which the pusher 28 is retracted and does not extend beyond the rest surface 21 so as not to interact with the ham 2 to be deboned and an operating configuration, not shown in the Figures, in which the pusher 28 exits at least partially from the rest surface 21 so as to push from the bottom upwards the ham 2 to be deboned to promote superior opening thereof and facilitate extracting of at least one bone.

The pusher 28 is driven, in use, by the operator 8 generally after the latter, by means of the use of a knife, in particular a deboning knife, has made an incision around the head of the femur and a longitudinal cut along the femur bone starting from the ankle bone as far as the joint of the knee of the ham 2 to be deboned.

The pusher 28 can be run, i.e. can move from the non-operating configuration N to the operating configuration, for example, by a pneumatic cylinder, which is not shown in the Figures, drivable by a control that can be arranged, for example, a platform 60 arranged resting on the resting plane 4, on which the operator 8 can rise in the operating zone 7 to perform the deboning operations on the ham 2. In this manner, the control can be driven by a foot of the operator 8, for example by exerting pressure on the control. By releasing the pressure on the control, the control is deactivated and the pusher 28 can move from the operating configuration to the non-operating configuration N.

The pusher 28 can be shaped as a pin.

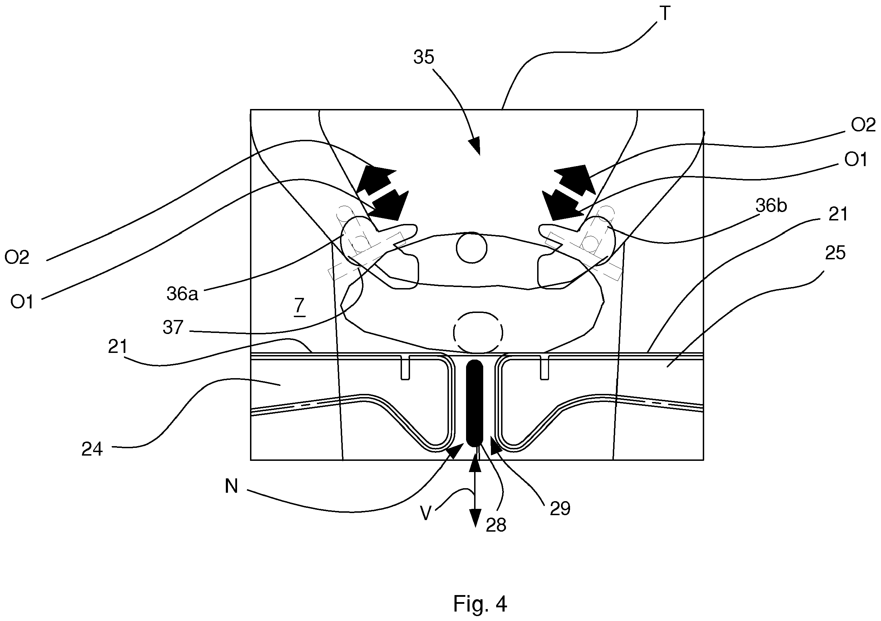

With reference in particular to Figure 4 that shows an enlarged detail T of Figure 3, a passage 29 is provided between the first conveyor belt 24 and the second conveyor belt 25, this passage 29 being arranged for enabling the transit of the pusher 28, which is driven, in use, between the non-operating configuration N and the operating configuration by the operator 8.

The moving means 18 of the deboning apparatus 1 further comprise transferring means 30 arranged for transferring the ham 2, once deboned, from the operating zone 7.

In particular, the transferring means 30 transfers the ham 2 along the moving path inside the deboning unit 6 from an upper plane defined by the rest surface 21 of the first conveying device 22 to a lower plane defined by the rest surface 21 of the second conveying device 23, the upper plane being arranged substantially at the height A1 and the lower plane being arranged substantially at the height A2.

The transferring means 30 is configured so as to define a third portion of the moving path, this third portion comprising a rounded zone of the C that connects the first portion to the second portion of the C.

The C-shaped conformation of the moving path is permitted by the reciprocal arrangement of the first conveying device 22 (and thus of the entry zone 10), of the second conveying device 23 (and thus of the outlet zone 19) and the transferring means 30.

In the embodiment illustrated in the Figures, the transferring means 30 comprises a tilting moving device 31 rotatable around a rotation axis R, shown with a dashed and dotted line in Figure 2, and provided with a rest zone 32 intended to supportingly receive the ham 2 immediately after it has been deboned.

The rest surface 21 of the moving means 18 is also defined by the rest zone 32 of the tilting moving device 31, and also by the rest surfaces of the first conveying device 22 and of the second conveying device 23.

The tilting moving device 31 is rotatable, in particular, in two opposite directions shown by the arrows with an arched rod of Figure 3, so as to be able to vary a tilt of the rest zone 32 with respect to the resting plane 4. In particular, the tilting moving device 31 is rotatable between an upper position S in which an end part 33 of the rest zone 32 is arranged near an end area 34 of the rest surface 21 defined by the first conveying device 22 and a lower second position I (shown by a dashed line in Figure 3) in which the end part 33 of the rest zone 32 is arranged near an end area 44 of the rest surface 21 defined by the second conveying device 23.

The tilting moving device 31 can comprise a conveyor 51 provided with a support structure hinged on a drive shaft that enables the drive shaft to rotate around the rotation axis R.

The rotation axis R can coincide substantially with the rotation axis of a pulley, for example the drive pulley, with which the conveyor belt is provided.

The rotation axis R is arranged at a third height A3 with respect to the intermediate resting plane 4 between the first height A1 and the second height A2.

The rotation axis R can be substantially parallel to the advancement direction A of the ham 2 on the supplying means 9 and substantially perpendicular to the first moving direction D1 and to the second moving direction D2 or, in other words, perpendicular to the direction of motion of the conveyor 51.

In one alternative embodiment, the transferring means 30, instead of the tilting moving device 31, comprises a lifting device, for example a belt lifting device, arranged for transferring the deboned ham 2 from the first conveying device 22 to the second conveying device 23 by moving the deboned ham 2 along a substantially vertical direction, i.e. substantially perpendicular to the conveying device 22 and to the second conveying device 23.

With particular reference to Figure 4, the deboning unit 6 of the deboning apparatus 1 can further comprise gripping means 35 fitted to the frame 12 to retain the ham 2 during the deboning operation.

In particular, the gripping means 35 is fitted to the frame 12 so as to be positioned above the rest surface 21 during operation thereof. In this manner, the drive of the gripping means 35 does not obstruct the moving means 18 and, in particular, the rest surface 21, during the deboning operation. Owing to the positioning above the operating zone 7 of the gripping means 35, the movement of the ham 2 inside the operating zone 7 is free, i.e. is not hindered by the gripping means 35.

The gripping means 35 is provided with a pair of clamps, or jaws, 36a, 36b that are movable towards/away from one another to push the ham 2 to be deboned therebetween and further movable towards and away from the rest surface 21 of the first conveying device 22 so that they can press the ham 2 to be deboned against said rest surface 21. In this manner it is possible to immobilize the ham 2 to be deboned in the operating zone 7 and permit easy extraction of at least one bone by the operator 8.

With reference in particular to Figure 2, the clamps 36a, 36b are provided with a respective engagement surface 37 that can be provided with teeth 46 that protrude from the engagement surface 37 and are intended to interact with a portion of the meat of the ham 2 so as to increase the grip with the latter when the clamps 36a, 36b are driven to immobilize the ham 2 to be deboned against the rest surface 21.

Each clamp 36a, 36b is connected to the frame 12 for example by a respective support arm 43.

Each clamp 36a, 36b can be lowered or raised with respect to the rest surface 21 of the first conveying device 22 by driving a respective actuator, in particular linear, for example a hydraulic cylinder connected to the respective support arm 43 of each clamp 36a, 36b.

Each actuator is driven by the operator 8, for example by pressing a button to which the actuator is connected.

The actuators are so driven as to move the clamps 36a, 36b towards and away from the rest surface 21 and reciprocally towards and away from one another along respectively a first operating direction O1 and along a second moving direction O2, that are opposite to one another.

The operating directions O1, O2 are oblique with respect to the first moving direction D1 and to the second moving direction D2. Accordingly, the operating directions O1, O2 cut the rest surface 21 at an angle other than 90°.

The deboning apparatus 1 can further comprise a collecting station 38 arranged for receiving the ham 2 to be deboned before being supplied in turn to the operating zone 7 by the moving means 18.

The collecting station 38 can, further, receive one or more further hams 2 so that they can wait in the collecting station 38 whilst a first ham 2 is subjected to deboning in the operating zone 7. In other words, the collecting station 38 can act as a magazine or store of further hams 2.

The collecting station 38 is arranged in the deboning unit 6, for example near the entry zone 10 upstream of the operating zone 7. In other words, the collecting station 38 is interposed between the entry zone 10 and the operating zone 7.

The collecting station 38 is obtained, in particular, in the third conveyor belt 26 when the latter is present.

Owing to the collecting station 38, the deboning operations of the hams 2 are accelerated because a further ham 2 is already available near the operating zone 7 to be conveyed to the operating zone 7 once a first ham 2 has been deboned and, from the operating zone 7, is transferred to the transferring means 30.

The deboning apparatus 1 can further comprise, an unloading device 39 arranged for receiving the at least one bone extracted from the ham 2 in the operating zone 7 and a disposal conveyor belt 40 associated with the unloading device 39 and connected to a waste disposal unit to deliver to the latter the at least one bone extracted from the ham 2 so that it can be disposed of, which is not shown in the Figures.

An unloading device 39 for each deboning unit 6 can be provided.

The unloading device 39 is fitted to the support body 13 such that a first end 47 of the unloading device 39 is arranged near the operating zone 7. In this manner, the operator 8, in use, can easily lift partially an arm and deposit on the unloading device 39 at least one bone extracted from the ham 2, hardly moving the torso away from the operating zone 7.

The unloading device 39 further comprises a second end 48, opposite said first end 47, that leads onto the disposal conveyor belt 40 such that the at least one bone falls by the force of gravity.

The unloading device 39 comprises at least one slide 61 on which the bones slide to lead onto the disposal conveyor belt 40.

In Figure 3, two slides 61 are shown schematically that are arranged for collecting the bones coming from the deboning operations of two opposite deboning units 6.

The disposal conveyor belt 40 can be fitted below the rest surface 21.

In one alternative embodiment of the deboning apparatus 1, not shown in the Figures, the second conveying device 23 and the transferring means 30 are not provided. The outlet zone 19 is obtained, in particular, near a further end of the first conveying device 22 opposite the end of the conveying device 22 near which the entry zone 10 is obtained. In other words, the outlet zone 19 is opposite the entry zone 10 with respect to the operating zone 7. Accordingly, in this embodiment, the entry zone 10 and the outlet zone 19 are arranged substantially at the same height, i.e. the first height A1. Again in this embodiment, the removing means 20 is associated with the moving means 18 near the further end of the first conveying device 22. The first conveying device 22 in this embodiment is configured for moving the ham 2 from the operating zone 7 to the removing means 20. The removing means 20 and the moving means 18 in this embodiment can be arranged substantially at the same height, i.e. at the first height A1. Alternatively, the removing means 20 can be arranged below the first conveying device 22, i.e. at a height from the resting plane 4 less than the first height A1 and the hams 2 fall from the first conveying device 22 and, in particular, from the first conveyor belt 24 if present, by the force of gravity onto the removing means 20. Also in this embodiment, the removing means 20 can be arranged substantially perpendicularly to the first conveying device 22, i.e. substantially parallel to the supplying means 9, and can receive the deboned hams 2 exiting each deboning unit 6 arranged on the same side of the supplying means 9. Alternatively, the removing means 20 can be provided for each deboning unit 6. The moving path of each ham 2 inside each deboning unit 6 in this embodiment is substantially linear.

In this alternative embodiment, the supplying means 9 is arranged near only the entry zone 10.

Below, operation of the deboning apparatus 1 according to the invention will be explained.

In use, a ham 2 to be processed is advanced and supplied to the deboning apparatus 1 by the supplying means 9.

When the deboning apparatus 1 is inserted into the processing line 3, immediately upstream of the deboning unit 6 the cutting station C is provided in which the final part of the leg of the ham 2, resting for example on conveying means of known type, is arranged by the further operator 80 inside the cutting device 11 and immobilized there in a clamp. The further operator 80 then cuts the final part of the leg by the saw with which the cutting device 11 is provided and cuts a string with which the ham 2 can be provided, having the purpose of enabling the ham 2 to be fixed to a seasoning frame during seasoning.

After the cutting station C, when there is one, the ham 2 is advanced by the supplying means 9 along the advancement direction A until it reaches near the entry zone 10 of a deboning unit 6 that has to be supplied with the ham 2. When the ham 2 reaches near the desired entry zone 10, the stopping and diverting element is moved from the removed position to the engaged position. In the engaged position, the stopping and diverting element comes into contact with the ham 2 and removes the ham 2 from the supplying means 9 and by moving the ham 2 along a direction substantially perpendicular to the advancement direction A to reach an area facing the desired entry zone 10. After this, the stopping and diverting element is returned to the removed position. When two opposite stopping and diverting elements are arranged, one for each deboning unit 6 of a pair of deboning units 6 that face the same portion of the supplying means 9, the wall of the stopping and diverting element is associated with the deboning unit 6 that does not have to be supplied by the ham 2, is lowered to enable the ham 2 to be transferred from the supplying means 9 to the desired deboning unit 6. Owing to the at least one stopping and diverting element, the ham 2 is transferred from the supplying means 9 to the first conveying device 22 of the moving means 18 and, in particular, to the entry zone 10.

Driving the moving means 18 and/or the at least one stopping and diverting element can be performed by a remote controller. Sensor means can be associated with the moving means 18, the sensor means being connected to the remote controller, for example via wireless, arranged for detecting the presence of the ham 2 and communicating the presence to the remote controller and consequently driving the moving means 18 and the stopping and diverting element. In particular, the sensor means can detect the presence of a ham 2 that, conveyed along the advancement direction A by the supplying means 9, reached near the entry zone 10 to which the ham 2 has to be transferred. For this purpose, the sensor means can be arranged near each entry zone 10; for example, can be fitted to the support body 13 or to the frame 12. Also, the sensor means can detect the presence of a ham 2 arranged in the collecting station 38. For this purpose, the sensor means can be arranged, in addition or alternatively to the above, in the collecting station 38, for example connected to the first conveying device 22, in particular to the third conveyor belt 26.

The sensor means can comprise optical sensor means, for example one or more photocells, and/or can comprise force sensor means, for example one or more load cells, arranged for detecting the presence of a ham 2. The one or more photocells and/or the one or more load cells can be arranged diagonally transversely to the advancement direction A.

A transfer transducer can be provided, for example an encoder, fitted to the supplying means 9 and connected to the remote controller, by means of which it is possible to establish when a ham 2 advancing on the supplying means 9 reaches near the desired entry zone 10.

The deboning apparatus 1 can further comprise control means connected to the remote controller and drivable by the operator 8 at the end of the deboning operation to send to the remote controller a signal indicating the end of the deboning operation. When the signal indicating the end of the deboning operation is received, the remote controller can accordingly drive the moving means 18 to evacuate the deboned ham 2 and to advance a further ham 2 to be deboned. The control means can be provided with a button. The control means can be fitted to the frame 12 so as to be able to be driven by a knee of the operator 8, by a hand of the operator 8 or, also, by both hands of the operator 8.

From the entry zone 10, the ham 2 to be deboned is then transferred by the first conveying device 22 to the operating zone 7 to be subjected to the deboning operation. In the operating zone 7 the moving means 18 is arrested such that the ham 2 is arranged at the passage 29. The operator 8 then drives the gripping means 35. The clamps 36a, 36b are driven to move along the first operating direction O1 so that the teeth 46 interact with a portion of the meat of the ham 2 and lock the ham 2 against the rest surface 21. The operator 8 then starts the deboning operation by making an incision around the head of the femur and a longitudinal cut and gradually uncovering with the help of the knife the at least one bone to be extracted. Simultaneously, the operator drives the pusher 28, by the specific control, to move from the non-operating configuration N to the operating configuration moving upwards along the vertical direction V (i.e. towards the rest surface 21 of the first conveying device 22 and thus to the ham 2) such that the pusher 28 pushes the ham 2 from below and promote the extraction of the at least one bone.

Once the at least one bone has been extracted, the operator 8 returns the at least one bone to the slide 61 of the unloading device 39 along walls tilted downwards, the at least one bone of the unloading device 39 slides until it reaches the second end 48 of the unloading device 39, after which it falls by the force of gravity onto the disposal conveyor belt 40 below.

When the first conveying device 22 comprises a plurality of conveyor belts, the ham 2 is received from the conveyor belt nearer the supplying means 9 and is moved by the conveyor belt nearer the supplying means 9 along the first moving direction D1 until a further conveyor belt is reached that is arranged downstream of the aforesaid conveyor belt nearer the supplying means 9. The movement of the ham 2 continues as set out above if other conveyor belts downstream of those disclosed here are present.

In the embodiment shown in the Figures, the ham 2 is first received on the third conveyor belt 26, is then advanced along the first moving direction D1 by the third conveyor belt 26 until it reaches the second conveyor belt 25 on which the ham 2 is transferred, is then advanced again along the first moving direction D1 by the second conveyor belt 25 until it reaches the first conveyor belt 24. The second conveyor belt 25 and the first conveyor belt 24 are then arrested and the travel of the ham 2 is immobilized so that the ham 2 is partially received resting on the rest surface 21 of the first conveyor belt 24 and of the second conveyor belt 25. In this manner the ham 2 has a lower surface that faces the passage 29.

Once the deboning operation has terminated, the operator 8 drives the pusher 28 by the specific control to move from the operating configuration to the non-operating configuration N such that the pusher 28 is moved along the vertical direction V downwards, i.e. moving away from the rest surface 21 of the first conveying device 22 and thus from the ham 2. The operator 8 further drives the jaws 36a, 36b to move along the second operating direction O2 to move away from the ham 2 and free the ham 2 from the clamp thereof. The operator 8 can then drive the control means, when provided, to send to the remote controller a signal indicating the end of the deboning operation.

At this point, the moving means 18 is again driven by the remote controller along the first moving direction D1 so as to convey the ham 2 from the first conveying device 22 (in particular from the first conveyor belt 24 in the embodiment of the Figures) to the transferring means 30. The tilting moving device 31 is or is taken to the upper position S and the conveyor 51 is so driven as to receive the ham 2 and remove the ham 2 from the first conveying device 22 so that it is completely resting on the tilting moving device 31.

Once the moving means 18 has exited the operating zone 7, the moving means 18 can be moved until a further ham 2 can be conveyed from the collecting station 38 to the operating zone 7. Whilst the further ham 2 is advanced along the moving means 18 to reach the operating zone 7, the operator 8 can sharpen the deboning knife.

Once the ham 2 is received, the tilting moving device 31 is rotated around the rotation axis R and moves from the upper position S to the lower position I. During rotation of the tilting moving device 31, the conveyor 51 is not driven. After this, the conveyor 51 is driven so as to move the ham 2 towards the second conveying device 23, which is driven in turn, and thus move the ham 2 from the transferring means 30 to the second conveying device 23. The tilting moving device 31 is then returned to the upper position S to be able to receive and convey a further ham 2.

The second conveying device 23 then conveys the ham 2 along the second moving direction D2 until it reaches the outlet zone 19 arranged at one end of the second conveying device 23 from which it is unloaded by the force of gravity onto the removing means 20 that conveys the ham 2 to other processing stations of the processing line 3.

The operation of the deboning apparatus 1 in the alternative embodiment that does not provide the second conveying device 23 and the transferring means 30 is identical to what is illustrated above with reference to the embodiment shown in the Figures, with the difference that the ham 2, once it is deboned in the operating zone 7, is conveyed along the first moving direction D1 until it reaches the outlet zone 19 arranged at the further end of the first conveying device 22 from which it is transferred, or is unloaded by the force of gravity, to the removing means 20 that conveys the ham 2 to other processing stations of the processing line 3.

Owing to the moving means 18, the ham 2 is moved inside each deboning unit 6 from the entry zone 10 to the outlet zone 19 without the operator 8 having to move the ham 2. This enables the fatigue to be reduced considerably to which the operator 8 is subjected during the deboning operation. Owing to the moving means 18, in fact, conveying each ham 2 inside the deboning unit 6 in which it is processed is automated completely and accordingly each ham 2 is conveyed automatically to the operating zone 7 and is evacuated automatically from the latter owing to the moving means 18.

Further, owing to the arrangement of the moving means 18, it is possible to debone more hams 2 over the same time than with prior art deboning apparatuses because the operator 8, after deboning the ham 2, can immediately debone a further ham 2 already positioned in the collecting station 38 and without having to lift up the deboned ham 2 and return the deboned ham 2 to the processing line 3.

As a result, owing to the automated movement of the hams 2 performed by the moving means 18, productivity of the deboning apparatus 1 is significantly increased with respect to prior art deboning apparatuses.

## Claims

1. Deboning apparatus (1) for deboning a ham (2) arranged for removing at least one bone from said ham (2) to be deboned, said deboning apparatus (1) being located on a resting plane (4) and comprising:
- a deboning unit (6) provided with an operating zone (7) wherein said at least one bone can be extracted from said ham (2) to be deboned, thus obtaining a deboned ham (2);
- supplying means (9) arranged for supplying said ham (2) to be deboned to an entry zone (10) of said deboning unit (6) that faces said supplying means (9);
- removing means (20) arranged for removing said deboned ham (2) from an outlet zone (19) of said deboning unit (6), said outlet zone (19) facing said removing means (20);
- said deboning unit (6) comprising a frame (12) and moving means (18) supported by said frame (12), said moving means (18) being arranged for conveying said ham (2) along a moving path provided inside said deboning unit (6) between said entry zone (10) and said outlet zone (19) of said deboning unit (6) passing in said operating zone (7) interposed between said entry zone (10) and said outlet zone (19) along said moving path, so as to supply said ham (2) to be deboned to said operating zone (7) and remove said deboned ham (2) from said operating zone (7);
and wherein said moving means (18) comprises a first conveying device (22) arranged at a first height (A1) with respect to said resting plane (4) and configured for moving said ham (2) along a first moving direction (D1), **characterized in that,**
said first conveying device (22) comprises at least a first conveyor belt (24) and a second conveyor belt (25) arranged in sequence, wherein between said first conveyor belt (24) and said second conveyor belt (25) a passage (29) is provided arranged for permitting the transit of a pusher (28) configured for pushing from below upwards said ham (2) to be deboned to promote superior opening thereof and facilitate the extraction of said at least one bone.

2. Deboning apparatus (1) for deboning a ham (2) according to claim 1, and further comprising a collecting station (38) arranged for receiving said ham (2) to be deboned before being supplied to said operating zone (7) by said moving means (18), said collecting station (38) being provided near said entry zone (10).

3. Deboning apparatus (1) for deboning a ham (2) according to claim 1 or 2, wherein said moving means (18) defines a rest surface (21) for said ham (2) and said entry zone (10) is obtained near an end of said first conveying device (22).

4. Deboning apparatus (1) for deboning a ham (2) according to claim 3, wherein said first conveyor belt (24) is arranged downstream of said second conveyor belt (25) along said first moving direction (D1).

5. Deboning apparatus (1) for deboning a ham (2) according to any one of claims 2 to 4, as claim 3 is appended to claim 2, wherein said first conveying device (22) further comprises a third conveyor belt (26) arranged upstream of said second conveyor belt (25) along said first moving direction (D1), said collecting station (38) being obtained in said third conveyor belt (26).

6. Deboning apparatus (1) for deboning a ham (2) according to any one of the preceding claims, wherein said outlet zone (19) is obtained at a further end of said first conveying device (22) opposite said end of said first conveying device (22) in which said entry zone (10) is arranged with respect to said operating zone (7), said entry zone (10) and said outlet zone (19) being arranged at said first height (A1) with respect to said resting plane (4).

7. Deboning apparatus (1) for deboning a ham (2) according to any one of the preceding claims, and further comprising a second device (23) arranged at a second height (A2) with respect to said resting plane (4) and configured for moving said ham (2) along a second moving direction (D2), in which said second height (A2) is less than said first height (A1) and said second moving direction (D2) is substantially parallel to and opposite said first moving direction (D1), said outlet zone (19) being obtained near an end of said second conveying means (23) that faces said removing means (20).

8. Deboning apparatus (1) for deboning a ham (2) according to claim 7, wherein said second conveying means (23) comprises a conveyor belt (27).

9. Deboning apparatus (1) for deboning a ham (2) according to claim 7 or 8, wherein said moving means (18) further comprises transferring means (30) arranged for transferring said deboned ham (2) from said first conveying device (22) to said second conveying means (23).

10. Deboning apparatus (1) for deboning a ham (2) according to claim 9, wherein said transferring means (30) comprises a tilting moving device (31) rotatable around a rotation axis (R) for varying a tilt of a rest zone (32) thereof for said ham (2) with respect to said resting plane (4) between an upper position (S) in which an end part (33) of said rest zone (32) is arranged near an end area (34) of said rest surface (21) defined by said first conveying device (22) and a lower second position (I) in which said end part (33) of said rest zone (32) is arranged near an end area (44) of said rest surface (21) defined by said second conveying means (23).

11. Deboning apparatus (1) for deboning a ham (2) according to claim 10, wherein said tilting moving device (31) comprises a conveyor (51) provided with a support structure hinged on a drive motor that permits rotation of said conveyor (51) around said rotation axis (R).

12. Deboning apparatus (1) for deboning a ham (2) according to claim 11, wherein said rotation axis (R) coincides with the rotation axis of a pulley of said conveyor (51).

13. Deboning apparatus (1) for deboning a ham (2) according to any one of claims 10 to 12, wherein said rotation axis (R) is arranged at a third height (A3) that is intermediate between said first height (A1) and said second height (A2) with respect to said resting plane (4).

14. Deboning apparatus (1) for deboning a ham (2) according to any one of claims 10 to 13, wherein said rotation axis (R) is substantially parallel to an advancement direction (A) of said ham (2) on said supplying means (9) and substantially perpendicular to said first moving direction (D1).

15. Deboning apparatus (1) for deboning a ham (2) according to any one of claims 3 to 14, as claims 5, 6 and 7 are appended to claim 3, wherein said deboning unit (6) comprises said pusher (28) fitted on said frame (12) in said operating zone (7) so as to slide in said passage (29) along a vertical direction (V) substantially perpendicular to said rest surface (21) alternatively between a non-operating configuration (N) in which said pusher (28) is retracted and does not extend beyond said rest surface (21) so as not to interact with said ham (2) to be deboned and an operating configuration in which said pusher (28) exits at least partially beyond said rest surface (21) so as to push said ham (2) to be deboned from below upwards to promote superior opening thereof and facilitate the extraction of said at least one bone.

16. Deboning apparatus (1) for deboning a ham (2) according to any one of claims 3 to 15, as claims 5, 6 and 7 are appended to claim 3, wherein said deboning unit (6) further comprises gripping means (35) fitted to said frame (12) above said rest surface (21) to retain said ham (2) during the deboning operation, said gripping means (35) being provided with a pair of clamps (36a, 36b) arranged for pushing said ham (2) against said rest surface (21) so as to immobilize the ham (2) and permit easy extraction of said at least one bone, said clamps of said pair of clamps (36a, 36b) being drivable along a first operating direction (O1) and along a second operating direction (O2) oblique with respect to said first moving direction (D1) and in opposite directions from one another.

17. Deboning apparatus (1) for deboning a ham (2) according to any one of the preceding claims, wherein said moving means (18) is substantially perpendicular to said supplying means (9) and to said removing means (20).

18. Deboning apparatus (1) for deboning a ham (2) according to any one of the preceding claims, and further comprising, an unloading device (39) arranged for receiving said at least one bone extracted from said ham (2) and a disposal conveyor belt (40) connected to a waste disposal unit, said unloading device (39) being provided with a first end (47) arranged near said operating zone (7) and with a second end (48) that leads onto said disposal conveyor belt (40) so that said at least one bone falls by the force of gravity onto said disposal conveyor belt (40) after being slid along walls of said unloading device (39) tilting downwards.

## Patentansprüche

1. Entbeinungsvorrichtung (1) zum Entbeinen eines Schinkens (2), der angeordnet ist, um wenigstens einen Knochen aus dem zu entbeinenden Schinken (2) zu entbeinen, wobei die Entbeinungsvorrichtung (1) auf einer Aufnahmeebene (4) vorgesehen ist und Folgendes aufweist:
- eine Entbeinungseinheit (6), die mit einem Arbeitsbereich (7) versehen ist, wo wenigstens ein Knochen von dem zu entbeinenden Schinken (2) extrahiert werden kann, um so einen entbeinten Schinken (2) zu erhalten;
- ein Zuführmittel (9), das angeordnet ist, um den zu entbeinenden Schinken (2) in eine Eingangszone (10) der Entbeinungseinheit (6) zuzuführen, die dem Zuführmittel (9) zugewandt ist;
- ein Entnahmemittel (20), das angeordnet ist, um den entbeinten Schinken (2) von einer Ausgangszone (19) der Entbeinungseinheit (6) zu entnehmen, wobei die Ausgangszone (19) dem Entnahmemittel (20) zugewandt ist;
- wobei die Entbeinungseinheit (6) einen Rahmen (12) und ein Bewegungsmittel (18) aufweist, das von dem Rahmen (12) aufgenommen ist, wobei das Bewegungsmittel (18) dazu vorgesehen ist, den Schinken (2) entlang eines Bewegungspfades zu fördern, der innerhalb der Entbeinungseinheit (6) zwischen der Eingangszone (10) und der Ausgangszone (19) der Entbeinungseinheit (6) und durchlaufend den Arbeitsbereich (7) vorgesehen ist, zwischen der Eingangszone (10) und der Ausgangszone (19) entlang des Bewegungspfades, um so den zu entbeinenden Schinken (2) zu dem Arbeitsbereich (7) zuzuführen und den entbeinten Schinken (2) von dem Arbeitsbereich (7) zu entnehmen;
und wobei das Bewegungsmittel (18) eine erste Fördereinrichtung (22) aufweist, die auf einer ersten Höhe (A1) in Bezug auf die Aufnahmeebene (4) angeordnet ist und dazu ausgebildet ist, den Schinken (2) entlang einer ersten Bewegungsrichtung (D1) zu bewegen, **dadurch gekennzeichnet, dass**,
die erste Fördereinrichtung (22) wenigstens ein erstes Förderband (24) und ein zweites Förderband (25) aufweist, die hintereinander angeordnet sind, wobei zwischen dem ersten Förderband (24) und dem zweiten Förderband (25) ein Durchlass (29) vorgesehen ist, um den Durchlass eines Drückers (28) zu ermöglichen, der vorgesehen ist, um den zu entbeinenden Schinken (2) von unten nach oben zu drücken und um eine bessere Öffnung desselben zu unterstützen und um die die Entfernung von wenigstens einem Knochen zu erleichtern.

2. Entbeinungsvorrichtung (1) zum Entbeinen eines Schinkens (2) nach Anspruch 1, die ferner eine Sammelstation (38) aufweist, die vorgesehen ist, um den zu entbeinenden Schinken (2) vor der Zuführung zum Arbeitsbereich (7) durch das Bewegungsmittel (18) aufzunehmen, wobei die Sammelstation (38) in der Nähe der Eingangszone (10) vorgesehen ist.

3. Entbeinungsvorrichtung (1) zum Entbeinen eines Schinkens (2) nach Anspruch 1 oder 2, bei der das Bewegungsmittel (18) eine Auflagefläche (21) für den Schinken (2) definiert und die Eingangszone (10) in der Nähe eines Endes der ersten Fördereinrichtung (22) vorgesehen ist.

4. Entbeinungsvorrichtung (1) zum Entbeinen eines Schinkens (2) nach Anspruch 3, bei der das erste Förderband (24) stromabwärts von dem zweiten Förderband (25) entlang der ersten Bewegungsrichtung (D1) angeordnet ist.

5. Entbeinungsvorrichtung (1) zum Entbeinen eines Schinkens (2) nach irgendeinem der Ansprüche 2 bis 4, soweit Anspruch 3 von Anspruch 2 abhängig ist, wobei die erste Fördereinrichtung (22) ferner ein drittes Förderband (26) aufweist, das stromaufwärts von dem zweiten Förderband (25) entlang der ersten Bewegungsrichtung (D1) angeordnet ist, wobei die Sammelstation (38) auf dem dritten Förderband (26) vorgesehen ist.

6. Entbeinungsvorrichtung (1) zum Entbeinen eines Schinkens (2) nach irgendeinem der vorhergehenden Ansprüche, bei der die Ausgangszone (19) an einem weiteren Ende der ersten Fördereinrichtung (22) gegenüber dem Ende der ersten Fördereinrichtung (22), an dem die Eingangszone (10) in Bezug auf den Arbeitsbereich (7) angeordnet ist, wobei die Eingangszone (10) und die Ausgangszone (19) auf einer ersten Höhe (A1) in Bezug auf die Aufnahmeebene (4) angeordnet sind.

7. Entbeinungsvorrichtung (1) zum Entbeinen eines Schinkens (2) nach irgendeinem der vorhergehenden Ansprüche, die ferner eine zweite Vorrichtung (23) aufweist, die auf einer zweiten Höhe (A2) in Bezug auf die Aufnahmeebene (4) angeordnet ist und dazu ausgebildet ist, den Schinken (2) entlang einer zweiten Bewegungsrichtung (D2) zu bewegen, in der die zweite Höhe (A2) geringer als die erste Höhe (A1) ist und wobei die zweite Bewegungsrichtung (D2) im Wesentlichen parallel zu und gegenüber der ersten Bewegungsrichtung (D1) ist, wobei die Ausgangszone (19) in der Nähe eines Endes der zweiten Fördereinrichtung (23) vorgesehen ist, das dem Entfernungsmittel (20) zugewandt ist.

8. Entbeinungsvorrichtung (1) zum Entbeinen eines Schinkens (2) nach Anspruch 7, bei der die zweite Fördereinrichtung (23) ein Förderband (27) aufweist.

9. Entbeinungsvorrichtung (1) zum Entbeinen eines Schinkens (2) nach Anspruch 7 oder 8, bei der das Bewegungsmittel (18) ferner ein Übertragungsmittel (30) aufweist, das vorgesehen ist, um den entbeinten Schinken (2) von der ersten Fördereinrichtung (22) und der zweiten Fördereinrichtung (23) zu übertragen.

10. Entbeinungsvorrichtung (1) zum Entbeinen eines Schinkens (2) nach Anspruch 9, bei der das Übertragungsmittel (30) eine Kippbewegungseinrichtung (31) aufweist, die um eine Drehachse (R) drehbar ist und eine Neigung einer Aufnahmezone (32) davon für den Schinken (2) in Bezug auf die Aufnahmeebene (4) zwischen einer oberen Position (S), in der ein Endteil (33) der Aufnahmezone (32) in der Nähe einer Endfläche (34) der Auflagefläche (21), die durch die erste Fördereinrichtung (22) definiert ist und einer unteren zweiten Position (I) angeordnet ist, in der das Endteil (33) der Aufnahmezone (32) in der Nähe einer Endfläche (44) der Auflagefläche (21) angeordnet ist, die durch das zweite Fördermittel (23) definiert ist.

11. Entbeinungsvorrichtung (1) zum Entbeinen eines Schinkens (2) nach Anspruch 10, bei der die Kippbewegungseinrichtung (31) einen Förderer (51) aufweist, der mit einer Aufnahmestruktur versehen ist, die an einem Antriebsmotor angelenkt ist, der eine Drehung des Förderers (51) um die Drehachse (R) erlaubt.

12. Entbeinungsvorrichtung (1) zum Entbeinen eines Schinkens (2) nach Anspruch 11, bei der die Drehachse (R) mit der Drehachse einer Rolle des Förderers (51) zusammenfällt.

13. Entbeinungsvorrichtung (1) zum Entbeinen eines Schinkens (2) nach irgendeinem der Ansprüche 10 bis 12, bei der die Drehachse (R) auf einer dritten Höhe (A3) angeordnet ist, die in Bezug auf die Aufnahmeebene (4) zwischen der ersten Höhe (A1) und der zweiten Höhe (A2) angeordnet ist.

14. Entbeinungsvorrichtung (1) zum Entbeinen eines Schinkens (2) nach irgendeinem der Ansprüche 10 bis 13, bei der die Drehachse (R) im Wesentlichen parallel zu einer Vorwärtsbewegungsrichtung (A) des Schinkens (2) auf dem Zuführmittel (9) und im Wesentlichen senkrecht zu der ersten Bewegungsrichtung (D1) angeordnet ist.

15. Entbeinungsvorrichtung (1) zum Entbeinen eines Schinkens (2) nach irgendeinem der Ansprüche 3 bis 14, soweit die Ansprüche 5, 6 und 7 von Anspruch 3 abhängig sind, wobei die Entbeinungseinheit (6) den Drücker (28) aufweist, der auf dem Rahmen (12) in dem Arbeitsbereich (7) eingepasst ist, um so in dem Durchlass (29) entlang einer vertikalen Richtung (V) zu gleiten, die im Wesentlichen senkrecht zu der Auflagefläche (21) vorgesehen ist, abwechselnd zwischen einer Nichtarbeits-Konfiguration (N), in der der Drücker (28) eingezogen ist und nicht über die Auflagefläche (21) hinaus hervorsteht, um so nicht mit dem zu entbeinenden Schinken (2) zu interagieren, und einer Arbeitskonfiguration, in der der Drücker (28) wenigstens teilweise die Auflagefläche (21) verlässt, um so den zu entbeinenden Schinken (2) von unterhalb zu drücken, um eine bessere Öffnung davon zu unterstützen und um die Entfernung des wenigstens einen Knochens zu erleichtern.

16. Entbeinungsvorrichtung (1) zum Entbeinen eines Schinkens (2) nach irgendeinem der Ansprüche 3 bis 15, soweit die Ansprüche 5, 6 und 7 von Anspruch 3 abhängig sind, wobei die Entbeinungseinheit (6) ferner ein Greifermittel (35) aufweist, das an dem Rahmen (12) oberhalb der Auflagefläche (21) vorgesehen ist, um den Schinken (2) während des Entbeinungsvorgangs zurückzuhalten, wobei das Greifermittel (35) mit einem Paar von Klauen (36a, 36b) versehen ist, die vorgesehen sind, um den Schinken (2) gegen die Auflagefläche (21) zu drücken, und um so den Schinken (2) festzuhalten und eine leichte Entfernung des wenigstens einen Knochens zu erlauben, wobei die Klauen des Paars von Klauen (36a, 36b) entlang einer ersten Arbeitsrichtung (O1) und entlang einer zweiten Arbeitsrichtung (O2), die schräg in Bezug auf die erste Bewegungsrichtung (D1) ist, antreibbar sind, sowie in einander gegenüberliegende Richtungen.

17. Entbeinungsvorrichtung (1) zum Entbeinen eines Schinkens (2) gemäß irgendeinem der vorhergehenden Ansprüche, wobei das Bewegungsmittel (18) im Wesentlichen senkrecht zu dem Zuführmittel (9) und zu dem Entnahmemittel (20) ist.

18. Entbeinungsvorrichtung (1) zum Entbeinen eines Schinkens (2) nach irgendeinem der vorhergehenden Ansprüche, die ferner eine Entladungseinrichtung (39) aufweist, die vorgesehen ist, um den wenigstens einen von dem Schinken (2) entnommenen Knochen aufzunehmen, und ferner ein Entsorgungsförderband (40), das mit einer Abfallentsorgungseinheit verbunden ist, wobei die Entladungseinrichtung (39) mit einem ersten Ende (47) versehen ist, das in der Nähe des Arbeitsbereiches (7) angeordnet ist, und mit einem zweiten Ende (48) versehen ist, das auf das Entsorgungsförderband (40) führt, so dass wenigstens ein Knochen durch Schwerkraft auf das Entsorgungsförderband (40) fällt, nachdem er entlang der Wände der nach unten geneigten Entladungseinrichtung (39) gleitet.

## Revendications

1. Appareil de désossage (1) pour désosser un jambon (2) agencé pour enlever au moins un os dudit jambon (2) à désosser, ledit appareil de désossage (1) se trouvant sur un plan d'appui (4) et comprenant:
- une unité de désossage (6) pourvue d'une zone d'opération (7) dans laquelle ledit au moins un os peut être extrait dudit jambon (2) à désosser, obtenant ainsi un jambon (2) désossé;
- des moyens d'amenée (9) agencés pour amener ledit jambon (2) à désosser à une zone d'entrée (10) de ladite unité de désossage (6) qui fait face auxdits moyens d'amenée (9);
- des moyens d'évacuation (20) agencés pour évacuer ledit jambon (2) désossé d'une zone de sortie (19) de ladite unité de désossage (6), ladite zone de sortie (19) faisant face auxdits moyens d'évacuation (20);
- ladite unité de désossage (6) comprenant un châssis (12) et des moyens de déplacement (18) supportés par ledit châssis (12), lesdits moyens de déplacement (18) étant agencés pour transporter ledit jambon (2) le long d'une voie de déplacement prévue à l'intérieur de ladite unité de désossage (6) entre ladite zone d'entrée (10) et ladite zone de sortie (19) de ladite unité de désossage (6) passant dans ladite zone d'opération (7) intercalée entre ladite zone d'entrée (10) et ladite zone de sortie (19) le long de ladite voie de déplacement, de manière à amener ledit jambon (2) à désosser à ladite zone d'opération (7) et à évacuer ledit jambon (2) désossé de ladite zone d'opération (7);
et dans lequel lesdits moyens de déplacement (18) comprennent un premier dispositif de transport (22) agencé à une première hauteur (A1) par rapport audit plan d'appui (4) et configuré pour déplacer ledit jambon (2) le long d'une première direction de déplacement (D1), **caractérisé en ce que** ledit premier dispositif de transport (22) comprend au moins une première bande transporteuse (24) et une deuxième bande transporteuse (25) agencées à la suite l'une de l'autre, dans lequel entre ladite première bande transporteuse (24) et ladite deuxième bande transporteuse (25) est prévu un passage (29) agencé pour permettre le transit d'un poussoir (28) configuré pour pousser du bas vers le haut ledit jambon (2) à désosser pour favoriser l'ouverture supérieure de celui-ci et faciliter l'extraction dudit au moins un os.

2. Appareil de désossage (1) pour désosser un jambon (2) selon la revendication 1, et comprenant en outre une station collectrice (38) agencée pour recevoir ledit jambon (2) à désosser avant qu'il ne soit amené à ladite zone d'opération (7) par lesdits moyens de déplacement (18), ladite station collectrice (38) étant prévue près de ladite zone d'entrée (10).

3. Appareil de désossage (1) pour désosser un jambon (2) selon la revendication 1 ou 2, dans lequel lesdits moyens de déplacement (18) définissent une surface d'appui (21) pour ledit jambon (2) et ladite zone d'entrée (10) est obtenue près d'une extrémité dudit premier dispositif de transport (22).

4. Appareil de désossage (1) pour désosser un jambon (2) selon la revendication 3, dans lequel ladite première bande transporteuse (24) est agencée en aval de ladite deuxième bande transporteuse (25) le long de ladite première direction de déplacement (D1).

5. Appareil de désossage (1) pour désosser un jambon (2) selon l'une quelconque des revendications 2 à 4, quand la revendication 3 est dépendante de la revendication 2, dans lequel ledit premier dispositif de transport (22) comprend en outre une troisième bande transporteuse (26) agencée en amont de ladite deuxième bande transporteuse (25) le long de la première direction de déplacement (D1), ladite station collectrice (38) étant obtenue dans ladite troisième bande transporteuse (26).

6. Appareil de désossage (1) pour désosser un jambon (2) selon l'une quelconque des revendications précédentes, dans lequel ladite zone de sortie (19) est obtenue à une autre extrémité dudit premier dispositif de transport (22) opposée à ladite extrémité dudit premier dispositif de transport (22) dans laquelle ladite zone d'entrée (10) est agencée par rapport à ladite zone d'opération (7), ladite zone d'entrée (10) et ladite zone de sortie (19) étant agencées à ladite première hauteur (A1) par rapport audit plan d'appui (4).

7. Appareil de désossage (1) pour désosser un jambon (2) selon l'une quelconque des revendications précédentes, et comprenant en outre un deuxième dispositif (23) agencé à une deuxième hauteur (A2) par rapport audit plan d'appui (4) et configuré pour déplacer ledit jambon (2) le long d'une deuxième direction de déplacement (D2), dans lequel ladite deuxième hauteur (A2) est inférieure à ladite première hauteur (A1) et ladite deuxième direction de déplacement (D2) est sensiblement parallèle à ladite première direction de déplacement (D1) et opposée à celle-ci, ladite zone de sortie (19) étant obtenue près d'une extrémité desdits deuxièmes moyens de transport (23) qui fait face auxdits moyens d'évacuation (20).

8. Appareil de désossage (1) pour désosser un jambon (2) selon la revendication 7, dans lequel lesdits deuxièmes moyens de transport (23) comprennent une bande transporteuse (27).

9. Appareil de désossage (1) pour désosser un jambon (2) selon la revendication 7 ou 8, dans lequel lesdits moyens de déplacement (18) comprennent en outre des moyens de transfert (30) agencés pour transférer ledit jambon (2) désossé dudit premier dispositif de transport (22) auxdits deuxièmes moyens de transport (23).

10. Appareil de désossage (1) pour désosser un jambon (2) selon la revendication 9, dans lequel lesdits moyens de transfert (30) comprennent un dispositif de déplacement inclinable (31) apte à tourner autour d'un axe de rotation (R) pour varier une inclinaison d'une zone d'appui (32) de celui-ci pour ledit jambon (2) par rapport audit plan d'appui (4) entre une position supérieure (S) dans laquelle une partie d'extrémité (33) de ladite zone d'appui (32) est agencée près d'une région d'extrémité (34) de ladite surface d'appui (21) définie par ledit premier dispositif de transport (22) et une deuxième position inférieure (I) dans laquelle ladite partie d'extrémité (33) de ladite zone d'appui (32) est agencée près d'une région d'extrémité (44) de ladite surface d'appui (21) définie par lesdits deuxièmes moyens de transport (23).

11. Appareil de désossage (1) pour désosser un jambon (2) selon la revendication 10, dans lequel ledit dispositif de déplacement inclinable (31) comprend un transporteur (51) pourvu d'une structure de support articulée sur un moteur d'entraînement qui permet une rotation dudit convoyeur (51) autour dudit axe de rotation (R).

12. Appareil de désossage (1) pour désosser un jambon (2) selon la revendication 11, dans lequel ledit axe de rotation (R) coïncide avec l'axe de rotation d'une poulie dudit transporteur (51).

13. Appareil de désossage (1) pour désosser un jambon (2) selon l'une quelconque des revendications 10 à 12, dans lequel ledit axe de rotation (R) est agencé à une troisième hauteur (A3) qui est intermédiaire entre ladite première hauteur (A1) et ladite deuxième hauteur (A2) par rapport audit plan d'appui (4).

14. Appareil de désossage (1) pour désosser un jambon (2) selon l'une quelconque des revendications 10 à 13, dans lequel ledit axe de rotation (R) est sensiblement parallèle à une direction d'avancée (A) dudit jambon (2) sur lesdits moyens d'amenée (9) et sensiblement perpendiculaire à ladite première direction de déplacement (D1).

15. Appareil de désossage (1) pour désosser un jambon (2) selon l'une quelconque des revendications 3 à 14, quand les revendications 5, 6 et 7 sont dépendantes de la revendication 3, dans lequel ladite unité de désossage (6) comprend ledit poussoir (28) monté sur ledit châssis (12) dans ladite zone d'opération (7) de manière à coulisser dans ledit passage (29) le long d'une direction verticale (V) sensiblement perpendiculaire à ladite surface d'appui (21) alternativement entre une configuration non opérationnelle (N) dans laquelle ledit poussoir (28) est rétracté et ne s'étend pas au-delà de ladite surface d'appui (21) de manière à ne pas interagir avec ledit jambon (2) à désosser et une configuration opérationnelle dans laquelle ledit poussoir (28) sort au moins partiellement au-delà de ladite surface d'appui (21) de manière à pousser ledit jambon (2) à désosser du bas vers le haut pour favoriser l'ouverture supérieure de celui-ci et faciliter l'extraction dudit au moins un os.

16. Appareil de désossage (1) pour désosser un jambon (2) selon l'une quelconque des revendications 3 à 15, quand les revendications 5, 6 et 7 sont dépendantes de la revendication 3, dans lequel ladite unité de désossage (6) comprend en outre des moyens de fixation (35) montés sur ledit châssis (12) au-dessus de ladite surface d'appui (21) pour retenir ledit jambon (2) pendant l'opération de désossage, lesdits moyens de fixation (35) étant pourvus d'une paire de pinces (36a, 36b) agencées pour pousser ledit jambon (2) contre ladite surface d'appui (21) de manière à immobiliser le jambon (2) et permettre une extraction facile dudit au moins un os, lesdites pinces desdites paires de pinces (36a, 36b) étant aptes à être entraînées le long d'une première direction d'opération (O1) et le long d'une deuxième direction d'opération (O2) obliques par rapport à ladite première direction de déplacement (D1) et dans des directions opposées l'une par rapport à l'autre.

17. Appareil de désossage (1) pour désosser un jambon (2) selon l'une quelconque des revendications précédentes, dans lequel lesdits moyens de déplacement (18) sont sensiblement perpendiculaires auxdits moyens d'amenée (9) et auxdits moyens d'évacuation (20).

18. Appareil de désossage (1) pour désosser un jambon (2) selon l'une quelconque des revendications précédentes, et comprenant en outre un dispositif de déchargement (39) agencé pour recevoir ledit au moins un os extrait dudit jambon (2) et une bande transporteuse d'élimination (40) reliée à une unité d'élimination de déchets, ledit dispositif de déchargement (39) étant pourvu d'une première extrémité (47) agencée près de ladite zone d'opération (7) et d'une deuxième extrémité (48) qui mène sur ladite bande transporteuse d'élimination (40) de sorte que ledit au moins un os tombe par gravité sur ladite bande transporteuse d'élimination (40) après avoir glissé le long de parois dudit dispositif de déchargement (39) en basculant vers le bas.
